(19) Europäisches Patentamt
European Patent Office
Office européen des brevets

(11) Veröffentlichungsnummer : **0 078 996**
**B1**

(12) # EUROPÄISCHE PATENTSCHRIFT

(45) Veröffentlichungstag der Patentschrift : **07.08.85**

(51) Int. Cl.⁴ : **C 08 F 10/00**, C 08 F 4/68

(21) Anmeldenummer : **82109967.8**

(22) Anmeldetag : **28.10.82**

(54) **Verfahren zum Herstellen einer Vanadium enthaltenden Katalysatorkomponente für Ziegler-Katalysatorsysteme.**

(30) Priorität : **07.11.81 DE 3144311**

(43) Veröffentlichungstag der Anmeldung : **18.05.83 Patentblatt 83/20**

(45) Bekanntmachung des Hinweises auf die Patenterteilung : **07.08.85 Patentblatt 85/32**

(84) Benannte Vertragsstaaten : **AT BE DE FR GB IT**

(56) Entgegenhaltungen :
**DE-A- 2 633 109**
**DE-A- 2 831 828**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Bachl, Robert, Dr.**
**Richard-Wagner-Strasse 61**
**D-6520 Worms 1 (DE)**
Erfinder : **Klaerner, Peter, Dr.**
**Hauptstrasse 62**
**D-6719 Battenberg (DE)**
Erfinder : **Schweier, Guenther, Dr.**
**Friedrich-Pietzsch-Strasse 14**
**D-6701 Friedelsheim (DE)**

**EP 0 078 996 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zum Herstellen einer Vanadium enthaltenden Katalysatorkomponente (1) für Ziegler-Katalysatorsysteme.

Solche Katalysatorsysteme werden bekanntlich eingesetzt im Rahmen von Verfahren zum Herstellen von kleinteiligen Homo- und Copolymerisaten von $C_2$- bis $C_6$-α-Monoolefinen durch Polymerisation des bzw. der Monomeren bei Temperaturen von 20 bis 110 °C und Olefin-Partialdrücken von 0,1 bis 40 bar in flüssig vorliegendem i-Butan — worin sich das zu polymerisierende Monomere bzw. Monomerengemisch in gelöster Form, das gebildete kleinteilige Polymerisat in suspendierter Form befinden — mittels des Ziegler-Katalysatorsystems, das seinerseits zusammengesetzt ist aus

(1) einer Vanadium enthaltenden Katalysatorkomponente, sowie

(2) einer Metallverbindung der allgemeinen Formel

$$Me\ A_{m-n}\ X_n,$$

worin stehen

Me für die Metalle Aluminium, Magnesium bzw. Zink, vorzugsweise Aluminium,

A für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest,

X für Chlor, Brom bzw. Wasserstoff, vorzugsweise Chlor bzw. Wasserstoff,

m für die Zahl der Wertigkeit des Metalls Me und

n für eine Zahl von 0 bis m-1, vorzugsweise eine Zahl von 0 bis 1,

mit der Maßgabe, daß das Atomverhätnis Vanadium aus der Katalysatorkomponente (1) : Metall (Me) aus der Katalysatorkomponente (2) im Bereich von 1 : 0,1 bis 1 : 400, vorzugsweise 1 : 4 bis 1 : 200 liegt.

Polymerisationsverfahren dieser Gattung, d. h. die sog. Suspensionspolymerisation von α-Monoolefinen in flüssig vorliegendem i-Butan, sind in mannigfachen Ausgestaltungen bekannt ; hierzu kann im gegebenen Zusammenhang insbesondere auf die in der US-PS-4 007 321 beschriebene Arbeitsweise, als einem exemplarischen Beispiel, verwiesen werden.

Die bekannten Polymerisationsverfahren haben sich — insgesamt gesehen — in der Großtechnik gut bewährt, was nicht zuletzt dem eingesetzten spezifischen Polymerisationsmedium, dem in flüssiger Phase vorliegenden i-Butan, zu verdanken ist.

Es versteht sich daher, daß man bestrebt ist, die Polymerisationsverfahren der in Rede stehenden Gattung noch weiterzuentwickeln, wobei man in erster Linie denken wird an den Einsatz besonders leistungsfähiger Katalysatorsysteme auf der Basis spezieller Vanadium enthaltender Katalysatorkomponenten (1).

Als solche wären z. B. in Betracht zu ziehen Katalysatorkomponenten (1), die gemäß der DE-OS-28 31 828 erhältlich sind.

Gegenstand dieser Offenlegungsschrift ist ein Verfahren zum Herstellen einer Vanadium enthaltenden Katalysatorkomponente (1) für Ziegler-Katalysatorsysteme, bei dem man

(1.1) einen feinteiligen, porösen, anorganisch-oxidischen Stoff (I), der einen Teilchendurchmesser von 1 bis 1 000, vorzugsweise 1 bis 400 μm, ein Porenvolumen von 0,3 bis 3, vorzugsweise 1 bis 2,5 $cm^3/g$ sowie eine Oberfläche von 100 bis 1 000, vorzugsweise 200 bis 500 $m^2/g$ besitzt und die Formel $SiO_2 \cdot aAl_2O_3$ — worin a steht für eine Zahl im Bereich von 0 bis 2, insbesondere 0 bis 0,5 — hat, und

(1.2) eine Lösung (II), wie sie sich ergibt beim Zusammenbringen von

(IIa) 100 Gewichtsteilen eines Alkohols der allgemeinen Formel

$$Z—OH,$$

worin Z steht für einen gesättigten $C_1$- bis $C_8$-Kohlenwasserstoffrest, insbesondere eine gesättigten $C_1$- bis $C_6$-Kohlenwasserstoffrest, und vorzugsweise einen $C_1$- bis $C_4$-Alkylrest, sowie

(IIb) 0,01 bis 5, vorzugsweise 0,05 bis 3,5 Gewichtsteilen (gerechnet als Vanadium) eines Vanadiumtrihalogenids, wobei das Halogen Chlor und/oder Brom sein kann, vorzugsweise eines Vanadiumtrichlorids,

miteinander in Berührung bringt unter Bildung einer Dispersion (III), mit der Maßgabe, daß das Gewichtsverhältnis anorganisch-oxidischer Stoff (I) : Vanadium in dem Vanadiumtrihalogenid (IIb) im Bereich von 1 : 0,01 bis 1 : 0,2, vorzugsweise von 1 : 0,03 bis 1 : 0,15, liegt, und die Dispersion (III) bei einer Temperatur, die unterhalb von 200, vorzugsweise unterhalb von 120 °C und oberhalb des Schmelzpunktes des verwendeten Alkohols (IIa) liegt, bis zur trockenen Konsistenz — Bildung der Katalysatorkomponente (1) — eindampft.

Versucht man nun, solche, gemäß der DE-OS-28 31 828 erhaltene Katalysatorkomponenten (1) im Rahmen des eingangs geschilderten Verfahrens zur Suspensionspolymerisation von α-Monoolefinen in flüssig vorliegendem i-Butan — nicht in anderen flüssigen Polymerisationsmedien ! — einzusetzen, um eine Aggregation der jeweils positiven Eigenschaften zu bewirken, so stellt man überraschenderweise fest, daß keine oder doch so gut wie keine Polymerisation stattfindet.

Damit hatte sich die Aufgabe gestellt, die zur vorliegenden Erfindung geführt hat :

Eine neue Vanadium enthaltende Katalysatorkomponente (1) für Ziegler-Katalysatorsysteme aufzuzeigen, die auf einer Katalysatorkomponente gemäß der DE-OS-28 31 828 basiert und daraus so weitergebildet ist, daß sie im Rahmen von Polymerisationsverfahren der eingangs definierten Gattung wünschenswert große Mengen an Polymerisat mit guten Eigenschaften zu liefern vermag.

Es wurde gefunden, daß die gestellte Aufgabe gelöst werden kann, wenn man die gemäß der DE-OS-28 31 828 erhältlichen Katalysatorkomponenten als Zwischenprodukte nimmt und diese in Dispersion durch eine Behandlung mit bestimmten aluminiumorganischen Verbindungen zu neuen Vanadium enthaltenden Katalysatorkomponenten (1) umsetzt.

Gegenstand der vorliegenden Erfindung ist dementsprechend ein Verfahren zum Herstellen einer Vanadium enthaltenden Katalysatorkomponente (1) für Ziegler-Katalysatorsysteme, wobei man

(1.1) zum Herstellen der Katalysatorkomponente (1)

(1.1.1) einen feinteiligen, porösen, anorganisch-oxidischen Stoff (I), der einen Teilchendurchmesser von 1 bis 1 000, vorzugsweise 1 bis 400 μm, ein Porenvolumen von 0,3 bis 3, vorzugsweise 1 bis 2,5 $cm^3/g$ sowie eine Oberfläche von 100 bis 1 000, vorzugsweise 200 bis 500 $m^2/g$ besitzt und die Formel $SiO_2 \cdot aAl_2O_3$ — worin a steht für eine Zahl im Bereich von 0 bis 2, insbesondere 0 bis 0,5 — hat, und

(1.1.2) eine Lösung (II), wie sie sich ergibt beim Zusammenbringen von

(IIa) 100 Gewichtsteilen eines Alkohols der allgemeinen Formel

$$Z—OH,$$

worin Z steht für einen gesättigten $C_1$- bis $C_8$-Kohlenwasserstoffrest, insbesondere einen gesättigten $C_1$- bis $C_6$-Kohlenwasserstoffrest, und vorzugsweise einen $C_1$- bis $C_4$-Alkylrest, sowie

(IIb) 0,01 bis 5, vorzugsweise 0,05 bis 3 Gewichtsteilen (gerechnet als Vanadium) eines Vanadiumtrihalogenids, wobei das Halogen Chlor und/oder Brom sein kann, vorzugsweise eines Vanadiumtrichlorids,

miteinander in Berührung bringt unter Bildung einer Dispersion (III), mit der Maßgabe, daß das Gewichtsverhältnis anorganisch-oxidischer Stoff (I) : Vanadium in dem Vanadiumtrihalogenid (IIb) im Bereich von 1 : 0,01 bis 1 : 0,2, vorzugsweise von 1 : 0,03 bis 1 : 0,2, liegt, die Dispersion (III) bei einer Temperatur, die unterhalb von 200, vorzugsweise unterhalb von 120 °C und oberhalb des Schmelzpunktes des verwendeten Alkohols (IIa) liegt, bis zur trockenen Konsistenz — Bildung eines festphasigen Produktes (IV) — eindampft.

Das erfindungsgemäße Verfahren ist dadurch gekennzeichnet, daß man beim Herstellen der Katalysatorkomponente (1)

(1.2) in einer zusätzlichen Stufe

(1.2.1) das aus Stufe (1.1) erhaltene festphasige Produkt (IV) und

(1.2.2) eine, in einem organischen Lösungsmittel gelöste Aluminiumverbindung (V) der allgemeinen Formel

$$Al\ B_{3-p}\ Y_p,$$

worin stehen

B für einen $C_1$- bis $C_{18}$-Kohlenwasserstoffrest, insbesondere einen $C_1$- bis $C_{12}$-Alkylrest, und vorzugsweise einen $C_1$- bis $C_8$-Alkylrest,

Y für Chlor, Brom, Wasserstoff oder OR, vorzugsweise Chlor, Wasserstoff oder OR,

R für einen $C_1$- bis $C_{12}$-Alkylrest, und vorzugsweise einen $C_1$- bis $C_8$-Alkylrest, und für eine Zahl von 0 bis 2, vorzugsweise die Zahl 1,

miteinander in Berührung bringt unter Bildung einer Dispersion (VI), mit der Maßgabe, daß das Gewichtsverhältnis festphasiges Produkt (IV) : Aluminiumverbindung (V) im Bereich von 1 : 0,05 bis 1 : 10, vorzugsweise 1 : 0,1 bis 1 : 5 liegt ; und derart mit dem dabei als Dispergiertes resultierenden festphasigen Produkt (VII) die neue Vanadium enthaltende Katalysatorkomponente (1) gewinnt.

Zu der neuen Vanadium enthaltenden Katalysatorkomponente (1) ist das Folgende zu sagen :

Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Dispersion (III) bildet, die bis zur trockenen Konsistenz — Bildung eines festphasigen Produkts (IV) — eingedampft wird. In Stufe (1.2) wird letzteres mit einer Lösung einer bestimmten, oben definierten Aluminiumverbindung (V) in Berührung gebracht unter neuerlicher Bildung einer Dispersion (VI), wobei das dabei als Dispergiertes resultierende festphasige Produkt (VII) die neue Katalysatorkomponente (1) ist.

Im einzelnen kann man dabei wie folgt verfahren :

Stufe (1.1)

Der anorganisch-oxidische Stoff (I) wird als Substanz oder in einem Alkohol dispergiert (zweckmäßigerweise einem Alkohol wie er unter (IIa) definiert ist und mit einem Feststoffgehalt der Dispersion von nicht weniger als 5 Gewichtsprozent) mit der Lösung (II) vereinigt. Es ist günstig, nach der Vereinigung das Ganze während einer Zeitspanne von 5 bis 120, insbesondere 20 bis 90 Minuten auf einer Temperatur von 10 bis 160, insbesondere 20 bis 120 °C zu halten und erst danach die gebildete Dispersion (III) einzudampfen.

Das Herstellen der Lösung (II) selbst kann so erfolgen, wie man üblicherweise Lösungen herstellt und ist insoweit nicht mit Besonderheiten verbunden.

Als abschließende Maßnahme bei Stufe (1.1) wird die Dispersion (III) bis zur trockenen Konsistenz eingedampft, wobei das festphasige Produkt (IV) erhalten wird. Hierbei kann man — unter Einhaltung der oben gegebenen Temperaturbedingungen — so verfahren, wie man üblicherweise Dispersionen schonend eindampft. Dies bedeutet, daß es im allgemeinen zweckmäßig — und bei relativ hohen Alkoholen (IIa) u. U. unerläßlich — ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen ; — wofür sich z. B. Rotationsverdampfer bewährt haben. Eine verbleibende Restmenge an Alkohol, etwa eine durch Komplexbildung gebundene Menge, ist für das festphasige Produkt (IV) im allgemeinen ohne Schaden.

Stufe (1.2)

Man bereitet zunächst in getrennten Ansätzen eine 1- bis 20-, vorzugsweise etwa 10-gewichtsprozentige Dispersion (D) des festphasigen Produkts (IV) sowie eine 5- bis 80-, vorzugsweise etwa 10-gewichtsprozentige Lösung der Aluminiumverbindung (V), wobei als Dispersions- bzw. Lösungsmittel insbesondere Kohlenwasserstoffe, vor allem relativ leichtsiedende Alkan-Kohlenwasserstoffe, wie Hexane, Heptane oder Benzine, in Betracht kommen. Danach vereinigt man die Dispersion (D) und die Lösung in solchen Mengenverhältnissen, daß das gewünschte Gewichtsverhältnis erreicht wird unter Bildung der Dispersion (VI). Zur Vereinigung wird man im allgemeinen die Lösung in die Dispersion (D) unter Rühren einbringen, denn diese Verfahrensweise ist praktischer als die — ebenfalls mögliche — umgekehrte. Bei Temperaturen von — 25 bis 120 °C, insbesondere bei Temperaturen von 25 bis 80 °C, ist innerhalb einer Zeitspanne von 15 bis 600 Minuten, insbesondere 60 bis 300 Minuten, die Bildung des — als Dispergiertes vorliegenden — festphasigen Produktes (VII) erfolgt. Dieses kann zweckmäßigerweise unmittelbar in Form der erhaltenen Dispersion (VI) — gegebenenfalls nach einer Wäsche durch Digerieren — als Vanadium enthaltende Katalysatorkomponente (1) verwendet werden. Falls gewünscht, ist es aber auch möglich, das festphasige Produkt (VII) zu isolieren und dann erst als Katalysatorkomponente (1) einzusetzen ; — wobei sich zum Isolieren z. B. der folgende Weg anbietet : Man trennt das Produkt (VII) von der flüssigen Phase mittels Filtration und wäscht es mit reiner Flüssigkeit (etwa der Art, die man auch als Dispersions- bzw. Lösungsmittel verwendet hatte), worauf man es trocknet, etwa im Vakuum.

Die neuen Vanadium enthaltenden Katalysatorkomponenten (1), d. h. die festphasigen Produkte (VII), lassen sich im Rahmen des eingangs geschilderten Verfahrens zum Herstellen der dort genannten Polymerisate so einsetzen, wie man üblicherweise Vanadium enthaltende Katalysatorkomponenten einsetzt. Insoweit sind also keine Besonderheiten gegeben, und es kann auf die aus Literatur und Praxis wohlbekannten Einsatzweisen verwiesen werden. — Es ist lediglich noch zu sagen, daß die neue Katalysatorkomponente sich vornehmlich zum Herstellen von Homopolymerisaten des Äthylens eignet und daß im Falle des Herstellens von Copolymerisaten des Äthylens mit höheren α-Monoolefinen oder des Herstellens von Homopolymerisaten von höheren α-Monoolefinen vor allem Propen, Buten-1 und Hexen-1 als α-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Vanadium enthaltenden Katalysatorkomponenten (1) betrifft, ist im einzelnen noch das Folgende zu sagen :

Der in Stufe (1.1) einzusetzende anorganisch-oxidische Stoff (I) wird im allgemeinen ein Alumosilikat oder — insbesondere — ein Siliciumdioxid sein ; wichtig ist, daß der Stoff die geforderten Eigenschaften besitzt und möglichst trocken ist (nach 6 Stunden bei einer Temperatur von 160 °C und einem Druck von 2 Torr kein Gewichtsverlust mehr). Besonders gut geeignete anorganisch-oxidische Stoffe sind solche, die gemäß der ersten Stufe (1) des in der DE-OS-24 11 735 beschriebenen Verfahrens erhalten werden, insbesondere dann, wenn dabei von Hydrogelen ausgegangen wird, die nach dem in der DE-OS-21 03 243 beschriebenen Verfahren erhalten werden.

Die einzusetzenden Alkohole (IIa) können z. B. sein : Methanol, Ethanol, Propanole, Butanole sowie Cyclohexanol. Als besonders gut geeignet haben sich erwiesen z. B. Methanol, Ethanol, Isopropanol sowie Cyclohexanol.

Die Alkohole (IIa) können eingesetzt werden in Form von Einzelindividuen sowie Gemischen aus zwei oder mehr Einzelindividuen.

Das einzusetzende Vanadiumtrihalogenid (IIb) kann ein bei Ziegler-Katalysatorsystemen übliches sein.

Sinngemäß das Gleiche gilt für die in Stufe (1.2) einzusetzenden, in einem organischen Lösungsmittel gelösten Aluminiumverbindungen (V). Als solche eignen sich z. B. die folgenden : Dialkylaluminiumchlorid, Trialkylaluminium, Dialkylaluminiumalkoxid, Dialkylaluminiumhydrid sowie Isoprenylaluminium. Als besonders gut geeignet sind hervorzuheben Diethylaluminiumchlorid und Isoprenylaluminium.

Die Aluminiumverbindungen (V) können eingesetzt werden in Form von Einzelindividuen, Gemischen aus zwei oder mehr Einzelindividuen sowie von Sesquiverbindungen.

Zu dem von der Erfindung betroffenen Ziegler-Katalysator-system ist im übrigen zur Katalysatorkomponente (2) zu sagen, daß sich hierfür die einschlägig üblichen Verbindungen eignen ; als besonders geeignete Individuen sind z. B. zu nennen Triisobutyl- und Isoprenylaluminium sowie als geeignet auch Triethyl- und Tri-n-octylaluminium.

Abschließend ist noch zu bemerken, daß die erfindungsgemäßen Vanadium enthaltenden Katalysatorkomponenten (1), d. h. die festphasigen Produkte (VII) sowie deren genannte Vor- und Zwischenprodukte empfindlich gegen hydrolytische sowie oxidative Einflüsse sind. Insoweit sollte man beim Umgang mit diesen Substanzen also die für Ziegler-Katalysatorkomponenten einschlägig üblichen Vorsichtsmaßnahmen treffen (z. B. Feuchtigkeitsausschluß, Inertgasatmosphäre).

## Beispiel 1

(A) Herstellen der neuen Katalysatorkomponente (1)

Stufe (1.1)

100 Gewichtsteile Siliciumdioxid ($SiO_2$, Teilchendurchmesser : 40 bis 150 µm, Porenvolumen : 1,9 $cm^3/g$, Oberfläche : 330 $m^2/g$) werden unter Rühren in 500 Gewichtsteilen Methanol dispergiert. Diese Dispersion wird mit einer Lösung von 50 Gewichtsteilen $VCl_3$ in 500 Gewichtsteilen Methanol vereinigt. Man rührt die dabei erhaltene Dispersion (III) 60 Minuten bei einer Temperatur von 40 °C und isoliert anschließend das gebildete festphasige Zwischenprodukt (IV) durch Abtreiben der flüchtigen Bestandteile in einem Rotationsverdampfer, der bis zu einem Betriebsdruck von (10 Torr) 0,013 bar und einer Betriebstemperatur von 50 °C gebracht wird. Die Analyse des erhaltenen Produktes ergibt einen Gehalt an Vanadium von 8,3 Gew.-%.

Stufe (1.2)

100 Gewichtsteile des in Stufe (1.1) gewonnene festphasigen Zwischenprodukts (IV) werden in 500 Gewichtsteilen Heptan dispergiert, worauf diese Dispersion bei einer Temperatur von 50 °C mit einer Lösung von 40 Gewichtsteilen Diethylaluminiumchlorid in 200 Gewichtsteilen Heptan versetzt und die so erhaltene Dispersion (VI) 2 Stunden bei der genannten Temperatur gerührt wird. Anschließend wird filtriert, drei mal mit Heptan gewaschen und im Vakuum getrocknet. Die Analyse des erhaltenen festphasigen Produkts (VII) — d. h. der Vanadium enthaltenden Katalysatorkomponente (1) — ergibt einen Gehalt an Vanadium von 7,5 Gewichtsprozent.

(B) Polymerisation mittels der neuen Katalysatorkomponente (1).

Sie erfolgt wie in Beispiel 2 der US-PS 4 007 321, mit den Ausnahmen, daß (i) die Polymerisation bei 100 °C erfolgt, (ii) unter Zusatz von 5 Mol-% — bezogen auf das monomere Ethylen — Wasserstoff als Molekulargewichtsregler gearbeitet wird und (iii) als Ziegler-Katalysatorsystem eingesetzt werden 5,0 g/h der oben beschriebenen Katalysatorkomponente (1) sowie 10,0 g/h Triisobutylaluminium als Katalysatorkomponente (2) entsprechend einem Atomverhältnis Vanadium aus (1) : Aluminium aus (2) von 1 : 6,9.

Auf diese Weise erhält man 15 kg/h kleinteiliges Polyethylen ; es zeichnet sich u. a. besonders aus durch ein hohes Schüttgewicht, eine gute Rieselfähigkeit und eine enge Teilchengrößeverteilung.

## Beispiel 2

(A) Herstellen der neuen Katalysatorkomponente (1)

Stufe (1.1)

100 Gewichtsteile Siliciumdioxid ($SiO_2$, Teilchendurchmesser : 40 bis 250 µm, Porenvolumen : 1,0 $cm^3/g$, Oberfläche : 290 $m^2/g$) werden unter Rührung in 500 Gewichtsteilen Ethanol dispergiert. Diese Dispersion wird mit einer Lösung von 50 Gewichtsteilen $VCl_3$ in 500 Gewichtsteilen Ethanol vereinigt. Man rührt die dabei erhaltene Dispersion (III) 100 Minuten bei einer Temperatur von 50 °C und isoliert anschließend das gebildete festphasige Produkt (IV) durch Abtreiben der flüchtigen Bestandteile in einem Rotationsverdampfer, der bis zu einem Betriebsdruck von 10 Torr und einer Betriebstemperatur von 60 °C gebracht wird. Die Analyse des erhaltenen Produktes ergibt einen Gehalt an Vanadium von 7,5 Gew.-%.

Stufe (1.2)

100 Gewichtsteile des in Stufe (1.1) gewonnenen festphasigen Produkts (IV) werden in 500 Gewichtsteilen Heptan dispergiert, worauf diese Dispersion bei einer Temperatur von 50 °C mit einer Lösung aus 40 Gewichtsteilen Ethylaluminiumsesquichlorid in 200 Gewichtsteilen Heptan versetzt und die so erhaltene Dispersion (VI) 3 Stunden bei der genannten Temperatur gerührt wird. Anschließend wird filtriert, drei mal mit Heptan gewaschen und im Vakuum getrocknet. Die Analyse des erhaltenen festphasigen Produkts (VII) — d. h. der Vanadium enthaltenden Katalysatorkomponente (1) — ergibt einen Gehalt an Vanadium von 8,3 Gewichtsprozent.

(B) Polymerisation mittels der neuen Katalysatorkomponente (1).

Sie erfolgt wie im vorstehenden Beispiel 1, mit der Ausnahme, daß als Ziegler-Katalysatorsystem eingesetzt werden 7,5 g/h der oben beschriebenen Katalysatorkomponente (1) sowie 10 g/h Triisobutylaluminium als Katalysatorkomponente (2), entsprechend einem Atomverhältnis Vanadium aus (1) : Aluminium aus (2) von 1 : 4,1.

Auf diese Weise erhält man 13,2 kg/h kleinteiliges Polyethylen mit wiederum guten morphologischen Eigenschaften.

**Patentanspruch**

Verfahren zum Herstellen einer Vanadium enthaltenden Katalysatorkomponente (1) für Ziegler-Katalysatorsysteme, wobei man

(1.1) zum Herstellen der Katalysatorkomponente (1)

(1.1.1) einen feinteiligen, porösen, anorganisch-oxidischen Stoff (I), der einen Teilchendurchmesser von 1 bis 1 000 µm, ein Porenvolumen von 0,3 bis 3 $cm^3/g$ sowie eine Oberfläche von 100 bis 1 000 $m^2/g$ besitzt und die Formel $SiO_2 \cdot aAl_2O_3$ — worin a steht für eine Zahl im Bereich von 0 bis 2 — hat, und

(1.1.2) eine Lösung (II), wie sie sich ergibt beim Zusammenbringen von

(IIa) 100 Gewichtsteilen eines Alkohols der allgemeinen Formel

$$Z{-}OH,$$

worin Z steht für einen gesättigten $C_1$- bis $C_8$-Kohlenwasserstoffrest, sowie

(IIb) 0,01 bis 5 Gewichtsteilen (gerechnet als Vanadium) eines Vanadiumtrihalogenids, wobei das Halogen Chlor und/oder Brom sein kann,

miteinander in Berührung bringt unter Bildung einer Dispersion (III), mit der Maßgabe, daß das Gewichtsverhältnis anorganisch-oxidischer Stoff (I) : Vanadium in dem Vanadiumtrihalogenid (IIb) im Bereich von 1 : 0,01 bis 1 : 0,2 liegt, die Dispersion (III) bei einer Temperatur, die unterhalb von 200 °C und oberhalb des Schmelzpunktes des verwendeten Alkohols (IIa) liegt, bis zur trockenen Konsistenz — Bildung eines festphasigen Produktes (IV) — eindampft,

dadurch gekennzeichnet, daß man beim Herstellen der Katalysatorkomponente (1)

(1.2) in einer zusätzlichen Stufe

(1.2.1) das aus Stufe (1.1) erhaltene festphasige Produkt (IV) und

(1.2.2) eine, in einem organischen Lösungsmittel gelöste Aluminiumverbindung (V) der allgemeinen Formel

$$Al\,B_{3-p}\,Y_p,$$

worin stehen

B für einen $C_1$- bis $C_{18}$-Kohlenwasserstoffrest,

Y für Chlor, Brom, Wasserstoff oder OR,

R für einen $C_1$- bis $C_{12}$-Kohlenwasserstoffrest, und

p für eine Zahl von 0 bis 2,

miteinander in Berührung bringt unter Bildung einer Dispersion (VI), mit der Maßgabe, daß das Gewichtsverhältnis festphasiges Produkt (IV) : Aluminiumverbindung (V) im Bereich von 1 : 0,05 bis 1 : 10 liegt, und derart mit dem dabei als Dispergiertes resultierenden festphasigen Produkt (VII) die neue Vanadium enthaltende Katalysatorkomponente (1) gewinnt.

**Claim**

A process for the preparation of a vanadium-containing catalyst component (1) for Ziegler catalyst systems, there being brought into contact with one another,

(1.1) for the purpose of preparing catalyst component (1),

(1.1.1) a particulate, porous, inorganic oxidic material (I) with a particle diameter of from 1 to 1 000

µm, a pore volume of from 0.3 to 3 $cm^3/g$ and a surface area of from 100 to 1 000 $m^2/g$ and having the formula $SiO_2 \cdot aAl_2O_3$, where a is a number from 0 to 2, and

(1.1.2) a solution (II) obtained by combining

(IIa) 100 parts by weight of an alcohol of the general formula

$$Z—OH,$$

where Z is a saturated hydrocarbon radical of 1 to 8 carbon atoms, and

(IIb) from 0.01 to 5 parts by weight (calculated as vanadium) of a vanadium trihalide, it being possible for halogen to be chlorine and/or bromine,

a dispersion (III) being formed, with the proviso that the weight ratio of inorganic oxidic material (I) to vanadium in the vanadium trihalide (IIb) is from 1 : 0.01 to 1 : 0.2, and the dispersion (III) is evaporated to dry consistency, with the formation of a solid-phase product IV, at a temperature which is below 200 °C and above the melting point of the alcohol (IIa) used,

wherein, in the preparation of the catalyst componente (1),

(1.2) in an additional stage

(1.2.1) the solid-phase product (IV) obtained in stage (1.1), and

(1.2.2) an aluminium compound (V) which is dissolved in an organic solvent and has the general formula

$$Al\ B_{3-p}\ Y_p,$$

where

B is a hydrocarbon radical of 1 to 18 carbon atoms,

Y is chlorine, bromine, hydrogen or OR,

R is a hydrocarbon radical of 1 to 12 carbon atoms, and

p is a number from 0 to 2,

are brought into contact with one another, with the formation of a dispersion (VI), with the proviso that the weight ratio of solid-phase product IV to aluminium compound (V) is from 1 : 0.05 to 1 : 10, the solid-phase product VII obtained as dispersed material thus forming the novel vanadium-containing catalyst component (1).

**Revendication**

Procédé de préparation d'une composante de catalyseur au vanadium (1) pour un système catalytique selon Ziegler, dans lequel

(1.1) pour préparer la composante de catalyseur (1), on met en contact

(1.1.1) une matière inorganique oxydée (I) poreuse en fines particules d'une granulométrie de 1 à 1 000 µm, avec un volume de pores de 0,3 à 3 $cm^3/g$ et une surface de 100 à 1 000 $m^2/g$, correspondant à la formule $SiO_2 \cdot aAl_2O_3$ avec a étant un nombre valant 0 à 2, et

(1.1.2) une solution (II), obtenue par mélange de

(IIa) 100 parties en poids d'un alcool de la formule générale

$$Z—OH,$$

où Z représente le reste d'un hydrocarbure saturé en $C_1$ à $C_8$, et de

(IIb) 0,01 à 5 parties en poids de vanadium sous forme d'un trihalogénure de vanadium, l'halogène étant le chlore et(ou) le brome,

pour former une dispersion (III), dans laquelle le rapport pondéral entre la matière inorganique oxydée (I) et le vanadium de trihalogénure (IIb) est compris entre 1 : 0,01 et 1 : 0,2, cette dispersion (III) étant évaporée, à une température inférieure à 200 °C et supérieure au point de fusion de l'alcool (IIa) employé, jusqu'à une consistance sèche et formation d'un produit à phase solide (IV),

caractérisé en ce que, lors de la préparation de la composante de catalyseur (1),

(1.2) dans une phase supplémentaire, on met en contact

(1.2.1) le produit à phase solide (IV) préparé dans le stade (1.1) et

(1.2.2) la solution dans un solvant organique d'un composé d'aluminium (V) de la formule générale

$$Al\ B_{3-p}\ Y_p,$$

dans laquelle

B représente le reste d'un hydrocarbure en $C_1$ à $C_{18}$

Y représente un atome de chlore, de brome ou d'hydrogène ou un groupe OR, où R représente le reste d'un hydrocarbure en $C_1$ à $C_{12}$ et

p est un nombre valant 0 à 2,

pour former une dispersion (VI), dans laquelle le rapport pondéral entre le produit à phase solide (IV) et le composé d'aluminium (V) est compris entre 1 : 0,05 et 1 : 10,
le produit à phase solide (VII) formé dispersé constituant la nouvelle composante de catalyseur au vanadium (1).